(19) **Europäisches Patentamt**
**European Patent Office**
**Office européen des brevets**

(11) **EP 2 773 061 B1**

(12) **EUROPEAN PATENT SPECIFICATION**

(45) Date of publication and mention
of the grant of the patent:
**18.11.2015 Bulletin 2015/47**

(51) Int Cl.:
*H04L 9/08* (2006.01)   *G06F 7/58* (2006.01)
*H04L 9/32* (2006.01)

(21) Application number: **13177328.5**

(22) Date of filing: **19.07.2013**

(54) **A method and an apparatus for deriving secret information from a series of response values and a method and an apparatus for providing helper data allowing to derive a secret information**

Verfahren und Vorrichtung zur Ableitung von geheimen Informationen aus einer Reihe von Reaktionswerten und Verfahren und Vorrichtung zur Bereitstellung von Helferdaten zur Ableitung geheimer Informationen

Procédé et appareil pour dériver des informations secrètes à partir d'une série de valeurs de réponse et procédé et appareil permettant de fournir des données auxiliaires pour dériver une information secrète

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.02.2013 EP 13157209**
**28.02.2013 EP 13157216**

(43) Date of publication of application:
**03.09.2014 Bulletin 2014/36**

(73) Proprietor: **Fraunhofer-Gesellschaft zur Förderung der angewandten Forschung e.V.**
**80686 München (DE)**

(72) Inventors:
• **Hiller, Matthias**
**80803 München (DE)**
• **Weiner, Michael Franz**
**80634 München (DE)**
• **Sigl, Georg**
**82327 Tutzing (DE)**

(74) Representative: **2SPL Patentanwälte PartG mbB**
**Postfach 15 17 23**
**80050 München (DE)**

(56) References cited:

• **CHRISTOPH BÖSCH ET AL: "Efficient Helper Data Key Extractor on FPGAs", 10 August 2008 (2008-08-10), CRYPTOGRAPHIC HARDWARE AND EMBEDDED SYSTEMS ? CHES 2008; [LECTURE NOTES IN COMPUTER SCIENCE], SPRINGER BERLIN HEIDELBERG, BERLIN, HEIDELBERG, PAGE(S) 181 - 197, XP047029773, ISBN: 978-3-540-85052-6 * section 1-3.1 ***
• **ROEL MAES ET AL: "Low-Overhead Implementation of a Soft Decision Helper Data Algorithm for SRAM PUFs", 6 September 2009 (2009-09-06), CRYPTOGRAPHIC HARDWARE AND EMBEDDED SYSTEMS - CHES 2009 (BOOK SERIES: LECTURE NOTES IN COMPUTER SCIENCES), SPRINGER BERLIN HEIDELBERG, BERLIN, HEIDELBERG, PAGE(S) 332 - 347, XP047029955, ISBN: 978-3-642-04137-2 * section 2.3 ***
• **VINCENT VAN DER LEEST ET AL: "Soft Decision Error Correction for Compact Memory-Based PUFs Using a Single Enrollment", 9 September 2012 (2012-09-09), CRYPTOGRAPHIC HARDWARE AND EMBEDDED SYSTEMS CHES 2012, SPRINGER BERLIN HEIDELBERG, BERLIN, HEIDELBERG, PAGE(S) 268 - 282, XP047016590, ISBN: 978-3-642-33026-1 * section 2.2-5.1 ***

**(Cont. next page)**

EP 2 773 061 B1

• FREDERIK ARMKNECHT ET AL: "Memory Leakage-Resilient Encryption Based on Physically Unclonable Functions", 6 December 2009 (2009-12-06), ADVANCES IN CRYPTOLOGY - ASIACRYPT 2009, SPRINGER BERLIN HEIDELBERG, BERLIN, HEIDELBERG, PAGE(S) 685 - 702, XP047030555, ISBN: 978-3-642-10365-0 * section 6 *

## Description

### Field

Embodiments relate to a method and an apparatus for deriving secret information from a series of response values and to a method for providing helper data allowing to derive a secret information.

### Background

Connected embedded devices constantly enter new areas in our everyday lives. They measure, process, store, and transmit more and more sensitive information, so it becomes of increasing importance to ensure the trustworthiness of the devices and the security of the data. Protecting these devices with cryptographic algorithms and protocols is challenging because traditional secure key storage requires sophisticated technology and increases the price.

Specific test functions depending on a physical and unpredictable property of an object, e.g. Physical Unclonable Functions (PUFs), may be candidates for providing secure and reliable key storage for integrated circuits. Instead of storing a cryptographic key in secure non-volatile memory, PUFs evaluate manufacturing variations inside a circuit to generate a noisy secret during runtime, which is called the PUF response. Syndrome coding schemes may then be used together with side information to reproduce reliable cryptographic keys from PUF responses.

Generalizing this idea, instead of storing a secret permanently, a test function as described herein or a PUF may create a secret represented by a series of response values of the test function on demand and during runtime. Measuring manufacturing variations inside a device can be seen equivalent to evaluating random variables, e.g. called PUF Outputs. A PUF response is the outcome of a PUF Output. Similar to reading out biometrics, PUF responses are affected by measurement noise and changing environmental conditions, which will also

be treated as noise. Biometric properties of organisms are, therefore, also test functions in the meaning of the term test function as used herein. An overview over popular PUF types and an empirical evaluation of PUFs on ASICs can be found in S. Katzenbeisser, Ü. Kocabas, V. Rozic, A.-R. Sadeghi, I. Verbauwhede, and C. Wachsmann, "PUFs: Myth, fact or busted? a security evaluation of physically unclonable functions (PUFs) cast in Silicon," in CHES (2012), ser. LNCS, E. Prouff and P. Schaumont, Eds., vol. 7428. Springer, Heidelberg, 2012, pp. 283-301. or in R. Maes, "Physically unclonable functions: Constructions, properties and applications," Dissertation, Katholieke Universiteit Leuven, 2012.

Creating a stable cryptographic key from a noisy PUF response or from a noisy series of response values of a test function raises to the task to create and store a Syndrome to remove the noise without revealing information about the key and to use the Syndrome for the recreation of the key during runtime of a device.

The following paragraph gives an overview of the previous achievements and the schemes used for the comparison. The Code-Offset Fuzzy Extractor was introduced by Y. Dodis, L. Reyzin, and A. Smith ["Fuzzy extractors: How to generate strong keys from biometrics and other noisy data," in EUROCRYPT (2004), ser. LNCS, C. Cachin and J. L. Camenisch, Eds., vol. 3027. Springer, Heidelberg, 2004, pp. 523-540]. The authors propose to mask a codeword by an XOR operation with the PUF response. Several hardware implementations covered different aspects and goals. Bösch et al. [C. Bösch, J. Guajardo, A.-R. Sadeghi, J. Shokrollahi, and P. Tuyls, "Efficient helper data key extractor on FPGAs," in CHES 2008, ser. LNCS, E. Oswald and P. Rohatgi, Eds., vol. 5154. Springer, Heidelberg, 2008, pp. 181-197.; and C. Bösch, "Efficient fuzzy extractors for reconfigurable hardware," Master's Thesis, Ruhr-University Bochum, 2008.] evaluated Reed-Muller and Bose-Chaudhuri-Hocquenghem (BCH) codes, and the Golay code for a hard decision scenario. Maes et al. [R. Maes, P. Tuyls, and I. Verbauwhede, "A soft decision helper data algorithm for SRAM PUFs," in IEEE ISIT (2009), 2009, pp. 2101-2105.] presented a soft decision approach with Reed-Muller codes and the GMC decoding proposed by Schnabl and Bossert [G. Schnabl and M. Bossert, "Soft-decision decoding of Reed-Muller codes as generalized multiple concatenated codes," IEEE Trans, on Inf. Th., vol. 41, no. 1, pp.304-308, 1995.]. Further, Maes et al. used BCH codes with a highly optimized BCH decoder [R. Maes, A. Van Herrewege, and I. Verbauwhede, "PUFKY: A fully functional PUF-based cryptographic key generator," in CHES (2012), ser. LNCS, E. Prouff and P. Schaumont, Eds., vol. 7428. Springer, Heidelberg, 2012, pp. 302-319.] and van der Leest et al. analyzed small Reed-Muller codes with brute force decoding and a Golay code decoder for soft decision decoding.

Instead of connecting the PUF response and a codeword with XOR operations, Index-Based Syndrome Coding (IBS) by Yu and Devadas [M.-D. Yu and S. Devadas, "Secure and robust error correction for physical unclonable functions," IEEE Design & Test of Computers, vol. 27, no. 1, pp. 48-65, 2010] searches a PUF Output block for a PUF Output whose response equals most likely the value of a given codeword bit and stores a pointer to this PUF Output. Yu et al. [M.-D. Yu, R. Sowell, A. Singh, D. M'Raihi, and S. Devadas, "Performance metrics and empirical results of a PUF cryptographic key generation ASIC," in IEEE HOST (2012), 2012, pp. 108-115.] evaluated PUF ASICs using IBS and BCH codes with a Euclidean solver and Chien search. Complementary IBS (C-IBS) by Hiller et al. increases the reliability of IBS by applying IBS several times to the same PUF Output block and adding an additional decoding step [M. Hiller, D. Merli, F. Stumpf, and G. Sigl, "Complementary IBS: Application specific error correction for PUFs," in IEEE HOST (2012), 2012, pp. 1-6.].

In summary, a Fuzzy Extractor combines Syndrome coding and error correction to compute a key with small error probability from a noisy PUF response. In previous pointer based Syndrome coding schemes such as IBS or C-IBS, independent blocks of PUF Outputs were used for each codeword bit. These conventional approaches map a fixed number of key bits to a fixed number of PUF Outputs that is to blocks of PUF Outputs having a predetermined fixed length. Therefore, the rate remains constant whereas the reliability of the selected PUF responses is subject to the stochastic process that created the PUF Outputs. As a consequence, one can only specify the reliability distribution over several devices but cannot ensure the minimum reliability for every device a priori.

Hence, there may be a desire have the possibility to provide a predetermined reliability for each individual device or entity using test functions to determine secret information.

## Summary

Embodiments determine helper data allowing to derive secret information from a series of response values of a response of a test function depending on a physical property of an object. A predetermined criterion is provided so as to be able to decide whether a predetermined property of a response value fulfills the predetermined criterion which in turn makes the respective response value an appropriate candidate to be used for the deriving of the secret information. A first position of a first response value fulfilling the predetermined criterion within the series is determined so that a first response value is identified which is used to derive the secret information. Further, a distance between a first position and a second position of a second response value within the series is determined, the second response value being the next response value fulfilling the predetermined criterion within the series after the first response value. Information being indicative of the determined distance is stored as a helper data associated with a second response value, i.e. as a Syndrome information allowing to reconstruct the secret information based on the series of response values of a response of the test function. That is, information allowing to determine the distance between subsequent response values which are used for storing the secret information is used instead of, e.g. absolute positions of response values within a predetermined sequence or within a block of response values having a fixed length. This may provide for the possibility of using shorter test functions, i.e. test functions providing or generating a shorter series of response values since the very next appropriate candidate is always chosen, depending on the predetermined criterion and without being restricted to the use of a only a single response value per fixed length block. Hence, the number of used response values per length of the series may be increased.

According to some embodiments, a method derives secret information from a series of response values of a response of a test function, the test function depending on a physical property of an object. A first part of the secret information is derived from a first response value at a first position within the series. The position of a second response value within the series is determined using the first position as well as helper data associated with a second response value, the helper data being indicative of a distance between the first position and the second position. Hence, a second part of the secret information can be derived from the second response value once its position is known.

The method may allow to derive secret information, for example a security key, at run time of a semiconductor device or a similar entity without the necessity of securely storing the secret information in an efficient manner yet providing for a predetermined error probability. Further, the method may possibly reduce the length of the required test function as well as the length or the size of the memory used to store the helper data. According to some embodiments, the helper data may be stored in an encoded representation so that the method further includes decoding the encoded representation to derive the helper data. This may possibly decrease the required size of the memory further.

## Brief description of the Figures

Some embodiments of apparatuses and/or methods will be described in the following by way of example only, and with reference to the accompanying figures, in which

Fig. 1 illustrates a flow chart of an embodiment of a method for deriving secret information;

Fig. 2 shows an example for a particular embodiment;

Fig. 3 illustrates an example for a further embodiment;

Fig. 4 schematically illustrates helper data as derived by the method of Fig. 1;

Fig. 5 illustrates encoding of a raw-representation of the helper data to provide helper data to be stored;

Fig. 6 schematically illustrates an embodiment of an apparatus for providing helper data;

Fig. 7 schematically illustrates a method for deriving secret information from a series of response values;

Fig. 8 schematically illustrates an embodiment of an apparatus for deriving secret information from a series of response values;

Fig. 9 illustrates a further embodiment of an apparatus for deriving secret information;

Fig. 10 illustrates a comparison of bit error probabilities of an embodiment with conventional approaches; and

Fig. 11 illustrates a comparison of the error probabilities for resulting with at least one wrong bit within a reconstructed key between embodiments and conventional approaches.

**Detailed Description**

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the disclosure. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

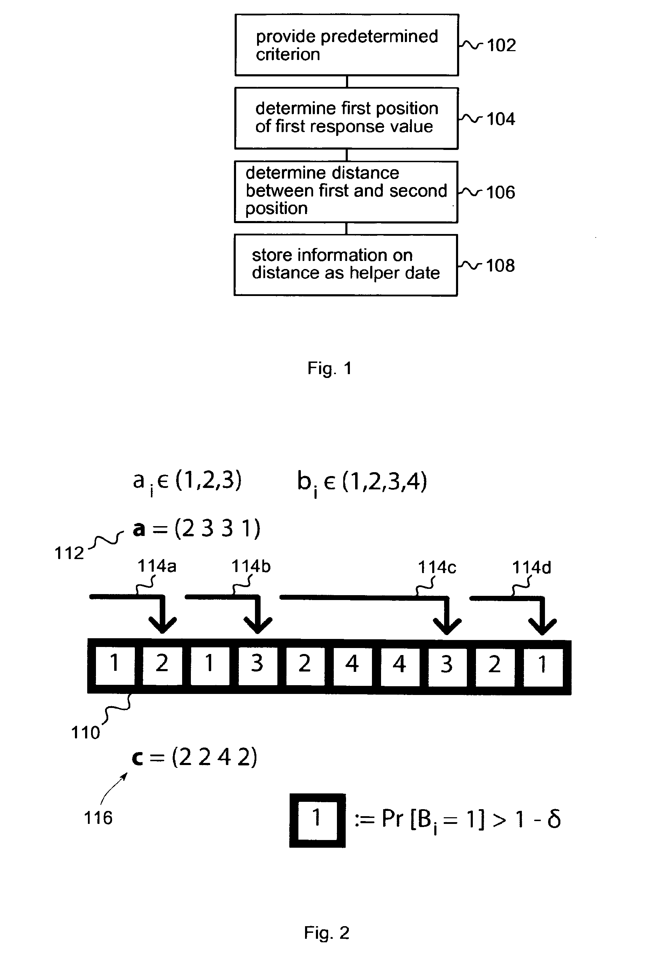

Fig. 1 illustrates an embodiment of a method for providing helper data allowing to derive secret information from a series of response values of a response of a test function, the test function depending on a physical property of an object. A test function may, for example, be based on the evaluation of arbitrary fluctuations of physical properties of electronic or semiconductor devices which may be caused by intrinsic process variable fluctuations during their production. However, a series of response values as determined by using a test function shall by no means be restricted to electrical applications or the like. The series of response values may also be determined using different physical properties of objects, such as for example biometric properties of living organisms, for example human beings or the like. One particular example is the evaluation of properties of human eyes in order to receive response values to be used by embodiments described herein. In general terms, a test function depending on a physical property of an object may be understood as any function given by specific properties of an object which are generated in an arbitrary manner, be it by nature or technical processes, so that those properties cannot be predicted in their entirety before.

The method comprises providing 102 a predetermined criterion, the predetermined criterion being indicative of a predetermined property of a response value to be used for deriving of the secret information. In a first determining 104, a first position of a first response value within the series is determined which fulfills the predetermined criterion. That is, by iterating through the series of response values a particular response value is identified which fulfills the predetermined criterion and hence appears to be usable for the generation of the secret information when a method for deriving secret information relying on the helper data is applied to the series of response values of the same test function determined by the method of Fig. 1. The method further comprises determining 106 of a distance between the first position and a second position of a second response value within the series, the second response value being a subsequent value within the series that fulfills the predetermined criterion after the first response value. That is for the determining 106 it is iterated further through the response until a subsequent response value is found that fulfills the criterion and, hence, is foreseen or appropriate to be used for redetermining the secret information.

In a storing step 108 information being indicative of the distance is stored as a helper data associated to the second response value so as to allow to determine the position of the second response value when the helper data is used to re-determine the secret information using a further series of response values provided by the test function. In other words, the information used as a helper data which allows identifying the response values within the series which are used to determine the secret information is stored in a differential manner. For example, the distance between subsequent response values may be stored by means of an integer number. Therefore, the embodiments as described herein will also be denoted as embodiments employing Differential Sequence Coding (DSC).

In principle, the predetermined criterion which selects the particular response values to be used may be any criterion related to a response value. To this end, a criterion related to a response value may also be understood as a common property or statistical property of a set of a predetermined number of response values at a given position within the series of response values when a response of the test function is generated the predetermined number of times to conclude on the common or statistical property of the so derived set. In one particular approach, the predetermined criterion uses a probability that the value as derived from the response value is not distorted by noise or other influences so that a subsequent determination of a series of response values using the test function will result in the same value at the same position with the given probability. That is, a reliability may be defined beforehand so as to allow to predict the reliability of the output of a reconstruction method using the thus-derived helper data for each and every device or implementation incorporating the particular method.

To this end, a predetermined criterion may, for example, be given as an acceptable error probability in percent or the like. Assuming a one-to-one association of the secret information to the response values, the predetermined criterion may demand that a secret number to be represented by the response value equals the number represented or given by the response value with a probability above a predetermined threshold. However, there does not necessarily need to be a one-to-one association between the number represented by the response value and the secret information to be stored. Instead, the secret information may also be mapped to a secret number before, using any possible function assigning at least a part of the secret information to the secret number.

According to some further embodiments, the subsequent response value may be the chosen to be the next response value within the series.

According to some embodiments, the predetermined criterion is chosen such that it is fulfilled when a probability that a secret number is equal to a number represented by the response value is above a predetermined threshold. The secret number may, for example, be a select number of a series of numbers constituting the secret information or it may be derived from at least a part of the secret information using an arbitrary association function. That is, the secret number may directly correspond to or represent a part of the secret information in a predictable manner. A desired confidence level may thus be defined for the whole system in that an upper limit of an error probability for a reconstruction of the secret information from a single response value can be defined. That is, the probability of the occurrence of an error during the reconstruction of the series of response values of the test function may become a design parameter to be fulfilled by each and every entity or device incorporating an embodiment of a method for deriving secret information from a series of response values using the thus-provided helper data.

According to some further embodiments, the predetermined criterion is selected from a number of previously-defined possible criteria to be applied. This may, for example, allow tailoring the method to the particular implementation or hardware used, for example taking into account fluctuations of the process conditions resulting in devices having different properties on a microscopic scale. Some embodiments store an indication of the selected predetermined criterion together with the helper data in order to apply the concept to different groups of entities or application scenarios based on a common set of possible criteria so as to make the concept applicable universally.

According to further embodiments, the association function that associates parts or individual values of the secret information to secret numbers is selected from a group of possible association functions available for the implementation. That is, a function mapping a part or an individual value of the secret information to a secret number may be different for two neighboring response values. This may allow using shorter test functions when the selection of the association can be adapted to the individual result of the test function of a particular device. According to further embodiments, association information being indicative of the select association function is, therefore, further stored as helper data associated with the second response value. That is an information on a first association function or rule as to how a response value should be interpreted in order to derive the secret information is furthermore stored as a helper data associated to individual response values or to groups of response values. This may result in a further decrease in the length of the test function. To this end, the select association function may also be denoted as first association function while a further association function used for the subsequent response value may also be denoted as second association function.

According to some embodiments, a security key which is to be represented by the response values of the test function is used as an input and redundancy information is added to the security key in order to derive or generate the secret information to be represented by the response values of the test function. This may further enhance the reliability of the method by increasing fault tolerance due to the insertion of redundancy information which may, for example, be derived from an error correction code.

According to further embodiments, the helper data to be stored may itself be determined by encoding using an encoding technique, i.e. raw helper data corresponding directly to the information to be stored is encoded by means of the application of a predetermined encoding rule so as to derive the helper data to be stored. This may, for example, decrease the number of information units required to store the helper data using, for example, Run Length Encoding (RLE) [e.g. S.W. Golomb, Run-length encodings. IEEE Transactions on Information Theory, IT--12(3):399--401, 1966]. According to further embodiments, the encoding rule may be used to enhance the security although the number of information units to store the information of the helper data may remain constant or increase. For example a shuffle-algorithm may be used in order to decrease the probability of a successful attack on the helper data or on the method.

In some conventional approaches, the block size is a fixed parameter and the reliability of the PUF Outputs within each block is subject to the process variation. Some DSC embodiments follow a different approach by defining a reliability or another predetermined criterion and adapting the block size for every code sequence bit to the stochastic process. One goal of DSC is to reduce the statistical variation in the reliability of the PUF Outputs that are used for key reproduction. Therefore, DSC only selects PUF Outputs within a given specification.

We treat all PUF Outputs or response values as one long sequence in DSC, so all PUF Outputs form one single sample instead of multiple independent samples as in previous work. This reduces the variance in the random process, according to the law of large numbers. In the following, the notation $x^y$ represents the concatenation of y elements $x_i$, i = 1, ...,y, of the same alphabet. Random variables are written in capital italic letters, numbers in small letters.

A cryptographic key or another secret information is encoded to a code sequence $c^k$ and then every bit or secret number of the code sequence or secret information is mapped to one PUF Output. The DSC encoding algorithm presented as an embodiment within the following pseudo code description searches n PUF Outputs $R^n$ (response values $R^n$) of a test function used as a PUF with where the response value represents or is equal to $r^n$. Therefore, in a binary implementation, response values $r_i$, i $\in$ {1,...,n}, are selected such that $\Pr[r_i = 1] \geq 1-p_{max} \lor \Pr[r_i = 0] \geq 1-p_{max}$ for a maximum error probability $p_{max} > 0$. The helper data sequence $w^k$ stores the mapping. Every element $w_i = (u_i, v_i)$ contains the distance $u_i \in GF(2^1)$ and an inversion bit $v_i \in GF(2)$, provided that the respective values can be used within the particular implementation. Error events error_1 and error_2 are discussed in the subsequent paragraphs for which this might not be the case. The following algorithm again illustrates an embodiment of a method for providing helper data $w_i = (u_i, v_i)$ allowing to derive secret information from a series of response values $r^n$ using pseudo code with mathematical terms. The predetermined criterion is given by probability $p_{max}$.

```
o := 0 (The offset counter o tracks absolute the position within Rⁿ)
for i := 1 → k do
    Search for one PUF output for each code bit.
    for j := 1 → 2ˡ do
        if o + j > n then
            Return error_1 (Not enough PUF outputs within the specification)
        else if Pr[r_{j+o} = 0] ≥ p_max ∨ Pr[r_{j+o} = 1] ≥ p_max then
            Write helper data
            u_i := j − 1
            if Pr[r_{j+o} = c_i] ≥ Pr[r_{j+o} = c_i ⊕ 1] then
                v_i := 0
            else
                v_i := 1
            end if
            Update offset
            o := o + j
            Break
        else if j = 2ˡ then
            Return error_2 (Counter overflow)
        end if
    end for
end for
```

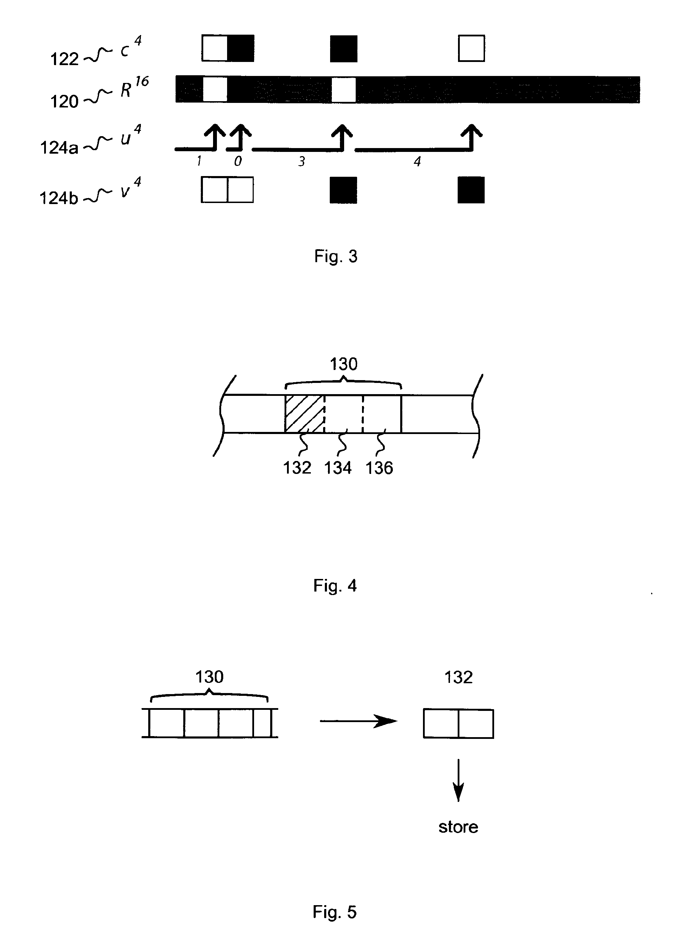

Fig. 2 gives a particular example as to how the helper data may be derived, although with a notation deviating from the general considerations above until the discussion of Fig. 3 starts. For the example of Fig. 2, the following definitions apply. A sequence **a** (security key) of values having an alphabet **A** and a length of 1 shall be embedded in a sequence **b** (the series of response values as generated by a test function) having an alphabet **B** (wherein $|\mathbf{B}|{\geq}|\mathbf{A}|$), the sequence having a length of m. The sequence of response values, as for example a PUF response **b** may be created by an uncorrelated and equally-distributed random variable $B_j$. A function $f$, the association function, assigns an element of **a** to a random variable $B_j$ of **B** and stores this assignment in the helper data **c,** the helper data having a length of 1 and an alphabet $c_i \in \mathbb{N}$. In the particular implementation of Fig. 2, the predetermined criterion corresponds to a maximal acceptable error tolerance $\delta$ and $o_{i-1}$ gives the absolute bit position within the series after i-1 iterations of the algorithm, i.e.:

$$o_{i-1} = \sum_{k=1}^{i-1} c_k.$$

This provides for:

$$c_i = \min_{j>o} j - o : \Pr\left[B_j = f(a_i)\right] > 1 - \delta.$$

The algorithm iterates through **B** in a particular direction and selects the next element that corresponds to $f(a_i)$ with a sufficient probability, i.e. if $\Pr[B_j = f(a_i)] > 1 - \delta$.

In the particular embodiment of Fig. 2, the sequence **a** = (2331) out of alphabet **A** = {1, 2, 3} is to be encoded into or represented by the series of response values 110 as given in Fig. 2. In this particularly simple example, the association function $f(a_i)$ is chosen to be a one-to-one identification, i.e. a value of the secret information is assigned to or represented by an identical response value. Furthermore, this simplified example uses only integer numbers as response values, hence a predetermined criterion corresponding to a confidence level and allowing for minor deviations is not given and the response values and the values of the secret information are associated to each other by means of the helper data when they directly correspond to one another.

With those simplifying assumptions, consider that the secret information 112 is to be reconstructed by means of the helper data 116 or a Syndrome stored as helper data. The helper data **c** indicates the distance between subsequent response values associated to at least a part of the secure information, wherein the part corresponds to one particular value of the secret information. Starting with the first value of **a,** which is 2, the series of response values 110 is searched until the first response value giving 2 as a response is found, which is the response value 114a at position 2. Hence, in the absence of a preceding response value, the helper data 116, i.e. **c** receives 2 as a first entry which is associated with the first response value. The second value of the secret information is 3 and hence, the response value 114b is determined in the next step at the fourth position within the series, i.e. two response values after the occurrence of the first response value. Since the helper data stores the information on the position of the response values in a differential manner, the second entry to the helper data **c,** corresponding to the second portion of the secret information and to the second response value, is 2. By repeating the previously-described steps until the very end of the values or secret numbers of the secret information **a,** the algorithm finds the next corresponding response value114c four positions after the second response value and the fourth corresponding response value 114d another two positions after the third response value. Hence, the third and fourth entries to the helper data are 4 and 2, respectively.

The following gives a more complicated example. In particular, the response values are no longer integer but real values indicating the expectation value for the response value. An expectation value may, for example, be derived by repeating the reception of response values of the test function several times and by determining an expectation value and a corresponding standard deviation for each of the response values after having received responses of the test function several times. However, alternative ways to receive non-integer response values are known, for example using conventional Static Random-Access Memory (SRAM) cells or the like. The expectation value intrinsically comprises a confidence level for the quantity to be received or given in the expectation value vector. Given that the secret information is again called **a** and the expectation or values of the response values are given by the sequence **E**, the following applies: $E(\mathbf{B})$ = [0.1 0.9 0.5 0.4 0.1 0.1 0.9 0.9 0.2].

If $\mathbf{a}$ = [0011], $\mathbf{A}$ = {0,1} and $\delta$ = 0.15,
$a_1$ = 0, $E(B_{free})$ = [**0.1** 0.9 0.5 0.4 0.1 0.1 0.9 0.9 0.2] -> $c_1$ = 1;
$a_2$ = 0, $E(B_{free})$ = [ 0.9 0.5 0.4 **0.1** 0.1 0.9 0.9 0.2] -> $c_2$ = 4;
$a_3$ = 1, $E(B_{free})$ = [ 0.1 **0.9** 0.9 0.2] -> $c_3$ = 2;
$a_4$ = 1, $E(B_{free})$ = [ **0.9** 0.2] -> $c_4$ = 1;
$\mathbf{c}$ = (1,4,2,1).

This result for the helper data **c** is received when the association function is identity and given that the above calculations are performed in the binary domain, i.e. based on bits having nominal values of 0 and 1. Further embodiments, however, may perform the method and the corresponding generation of a security key based on numbers in other systems, for example based on hexadecimal or decimal representations of the values.

If the association function can be selected from identity and inversion according to a further embodiment, which is indicated by the following equation:

$$f_i(a_i) = \mathrm{NOT}(a_i) \ \ \mathrm{or} \ \ f_i(a_i) = a_i,$$

the number of digits to be iterated through within the series of response values **E** can be decreased to 6, since a value corresponding to one of the two possible association functions can be found in a shorter or equal distance. Therefore, the helper data **c** of this embodiment results with **c** = (1,1,3,1). For each of the secret numbers to be represented by the response values, the association function applied should be stored additionally within the helper data in order to provide for the possibility of errorlessly reconstructing or deriving the secret information from a series of response values based on the given helper data. However, this comes with the benefit that, in principle, the length of the sequence of response values can be divided by two once the additional information is stored. That is, the complexity of the circuit required to determine the test function may also decrease by a factor of two, at the cost of additional storage space for the helper data.

In Fig. 3, the algorithm is again illustrated for a small toy scenario in the binary domain. Zeros are marked with white boxes, and ones are marked with black boxes. Outputs or response values $R_i$ with $Pr[r_i=0] \geq 1-p_{max}$ are also denoted with white boxes. Black boxes denote $Pr[ri=1] \geq 1-p_{max}$ and grey boxed stand for $p_{max} < Pr[r_i=1] < 1-p_{max}$.

In Fig. 3, code sequence $c^4$ = (0,1,1,0) is embedded into the PUF response i.e. into the series $R_i$ of response

values 120. $R_2$ is the first response value within the specification, so $u_1 = 1$. $Pr[r_2 = c_1] > Pr[r_2 = c_1 \oplus 1]$, so no inversion is necessary and $v_1 = 0$ and $o = 2$. In this embodiment, the inversion is stored in vector **v** as association information indicating which association function to use during reconstruction of $c_1$. After the method has been performed to the end, the helper data $w^4$ is computed after four iterations such that $u^4 = (1,0,3,4)$ and $v^4 = (0,0,1,1)$.

Fig. 4 schematically illustrates individual components the helper data 130 may comprise depending on the embodiment presently implemented.

A first component 132 of the helper data 130 is information being indicative of the distance between the second response value and a first response value as determined according to some embodiments. A second, optional component 134 indicates the association function used for the particular response value to which the helper data 130 corresponds or to which it is associated with. That is, the second portion 134 is indicative of the select association function. A third optional component 136 may correspond to selection information indicating the criterion fulfilled for the response value. Arbitrary combinations of optional components 134 and 136 may be stored together with the component 132 as a helper data 130. Helper data may be stored in an arbitrary format, e.g. as binary data, hexadecimal data or even in other representations.

Fig. 5 illustrates schematically as to how the helper data 130 may optionally be processed by means of an encoding rule before storing the helper data. Transforming a raw-representation of helper data 130 into an encoded representation 132 by means of some encoding rule may be performed in order to store the encoded representation 132 as the helper data, possibly saving some memory. To this end, an encoder may be used in order to reduce an average amount of bits or information values required to store the helper data. According to further embodiments, the encoding may be performed in order to increase security or to fulfill other encoding constraints or even power constraints of the system which may even result in a higher number of bits stored than the number of bits or information values of the raw-representation of the helper data 130. A particular example would be the desire to decrease the hamming weight of the raw representation of the helper data by means of encoding so as to decrease the power required for a wireless transmission of the encoded representation as compared to the raw representation. When the major goal is saving storage space, Run Length Encoding (RLE) may be employed since it is particularly suitable for geometrically-distributed values and since the expected distribution of the values of the helper data may be geometrical for $B_i$ independent and identically distributed (i.i.d).

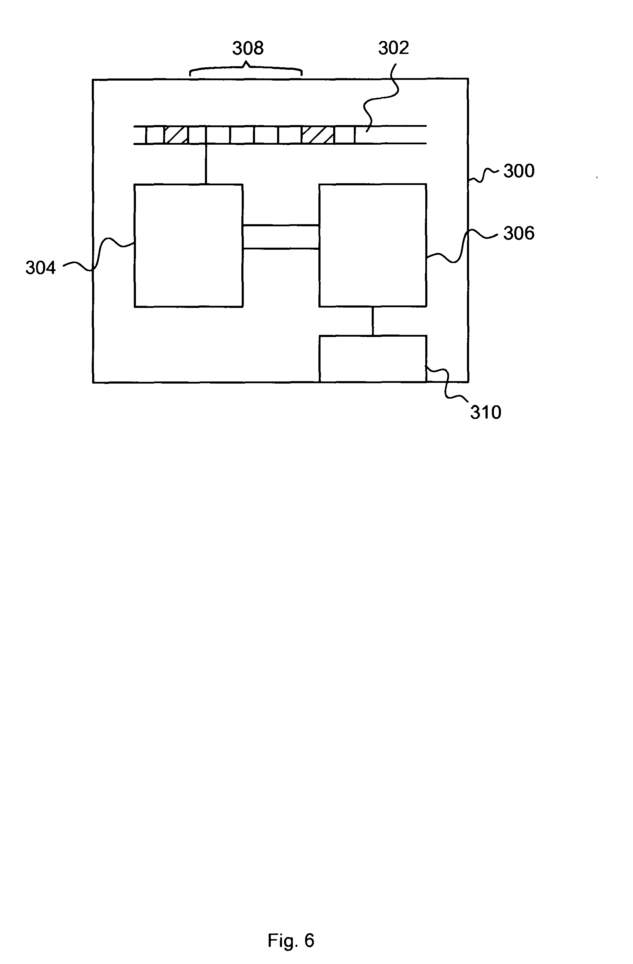

Fig. 6 illustrates schematically an apparatus for providing helper data 300 allowing to derive secret information from a series of response values 302 of a response of a test function, the test function depending on the physical property of an object. The apparatus is operable to or adapted to implement one of the previously discussed embodiments. To this end, a response evaluator 304 is adapted to determine a first response value within the series that fulfills a predetermined criterion, the predetermined criterion being indicative of a predetermined property of a response value to be used for the deriving of the secret information. The response value evaluator 304 is further adapted to determine a second response value within the series, the second response value being the next response value fulfilling the predetermined criterion after the first response value. The series of response values itself is shown for illustrative purposes only in Fig. 6. The apparatus may not necessarily need to create a series of response values itself but may also receive the series of response values as an external input in order to perform its operation. A helper data generator 306 within the apparatus 300 is adapted to determine a distance 308 between a first position of the first response value and a second position of the second response value within the series. The apparatus further comprises an output interface 310 for outputting or storing information being indicative of the distance as a helper data associated to the second response value. That is, the apparatus may either forward the determined helper data to an associated apparatus or store it within an internal memory for later use.

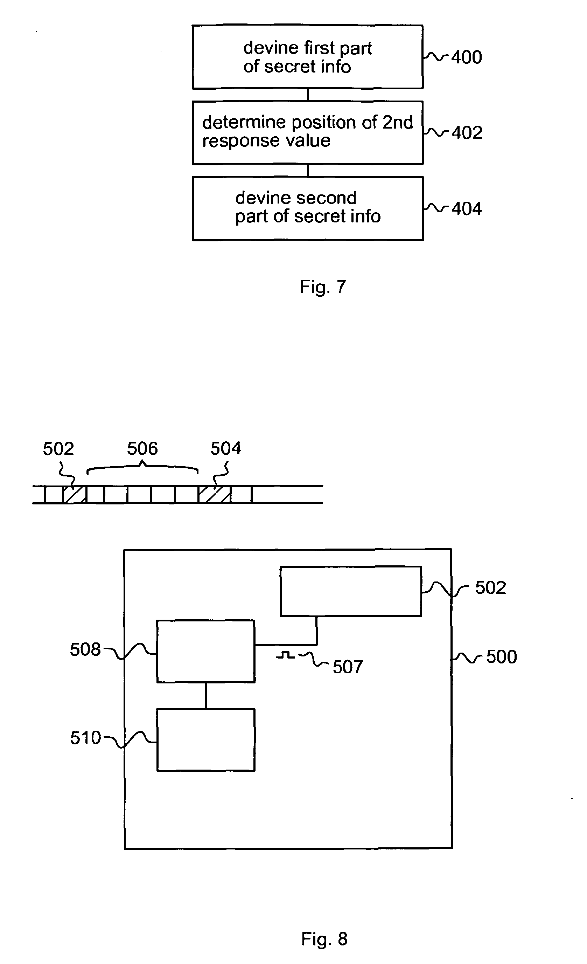

Fig. 7 illustrates a schematic view of an embodiment of a method for using the determined helper data in order to derive secret information from a series of response values of a response of a test function, the test function depending on a physical property of an object. The method comprises deriving 400 of a first part of the secret information from a first response value at a first position within the series and determining 402 the position of a second response value within the series using the first position and helper data associated with the second response value, the helper data being indicative of a distance between a first position and a second position. In a further deriving 404, a second part of the secret information is derived from the response value at the second position.

Fig. 8 schematically illustrates an embodiment of an apparatus for deriving secret information from a series of response values comprising a first response value 502 at a first position within the series and a second response value 504 at a different second position within the series. The apparatus 500 comprises a memory or input interface 502 adapted to store or receive helper data associated with a second response value, the helper data being indicative of a distance 506 between the first position 502 and the second position 504. A position evaluator 508 is adapted to determine the position of the second response value using the first position and the helper data 507. A determiner 510 is adapted to derive a first part of the secret information from the first response value and to derive a second part of the secret information from the second response value.

The information indicating the distance 506 between the first and second response values may be stored in arbitrary form, for example by directly indicating the distance by means of an integer number. The communication between the individual components of the apparatus, i.e. between the memory or input interface 502, the position evaluator 508 and the determiner 510 may be performed by using arbitrary communication techniques in an analog or digital domain. Further, the communication channels may use wired or wireless technology.

Embodiments of apparatuses as described herein may be implemented in arbitrary techniques, e.g. fabricated as a semiconductor chip, a device having multiple processors interconnected to each other and possibly also to memories or by any other means, for example also as an Application-Specific Integrated Circuit (ASIC) or the like.

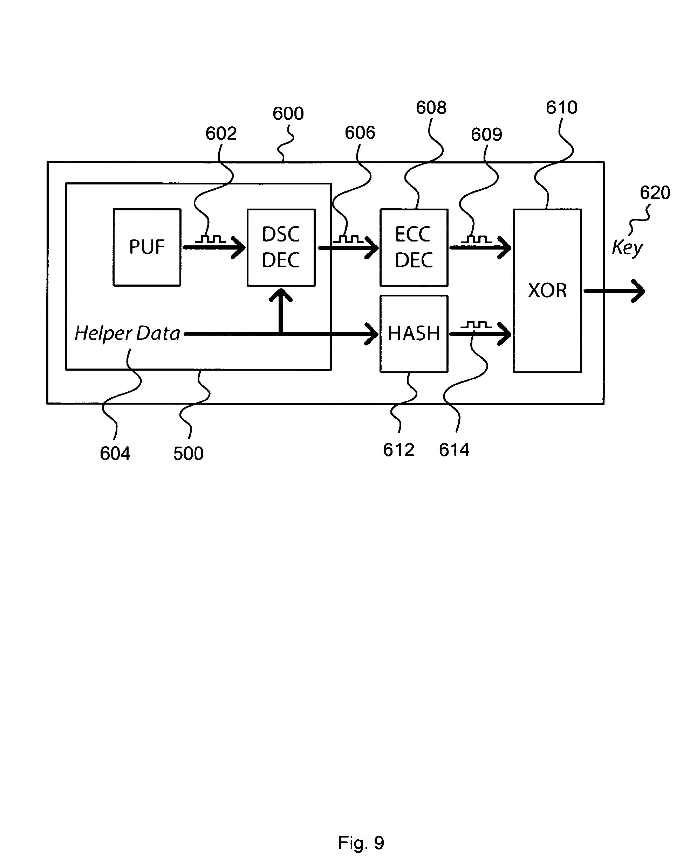

Fig. 9 illustrates an implementation suitable for a Field-Programmable Gate Array logic (FPGA). The embodiment of an apparatus 600 for deriving secret information from a series of response values of a response of a test function of Fig. 9 comprises four basic components.

An embodiment of an apparatus 500 according to Fig. 8 serves as a DSC Decoder or an apparatus for deriving secret information in order to map the helper data 604 and a series of response values 602 of the test function or PUF response to a code sequence 606. An ECC Decoder 608 serves to remove redundancy information as appended to a security key or an embedded information sequence during the generation of the secret information to be stored. In the particular implementation, a Viterbi Decoder is used to remove redundancy information as introduced by a convolutional code. A possible implementation of a Viterbi decoder may be found in S. W. Shaker, S. H. Elramly and K. A. Sheriata, FPGA implementation of a reconfigurable Viterbi decoder for WiMAX receiver, International Conference on Microelectronics (ICM), pp.264-267,2009, although one may remove some parallelism for a smaller implementation and use Block RAM instead of registers as compared to the implementation illustrated there.

The ECC Decoder 608 computes the embedded information sequence 609 as the secret information, which may, for example, be generated from an originally generated security key. That is the embedded information sequence 609 may correspond to a reconstructed security key 609. In order to prevent a manipulation attack on the helper data, a hash function generator 612 generates a hash value 614 of the used helper data 604. Finally, the XOR module 610 XORs or combines the reconstructed security key 609 and the hash value 614 to create a combined security key 620 at an output, the combined security key 620 being used for encryption. The XOR module 610 reads in the key and XORs it with the hash values. If the helper data exceeds the key size, multiple hash values may be created and XORed over the key in several iterations.

That is, in some embodiments, the reconstructed security key 609 is combined with at least a part of the helper data 604 or with data 614 depending on the helper data 604 to provide a combined security key 620, thus decreasing a risk for a successful attack on the helper data. In other words, the helper data $w_i \in GF(2^{1+1})$ may be read in in parallel on a 1 + 1 bit bus. One may, for example, use SPONGENT-88 as hash function with input and output bus size 8, so read in 7 bits of helper data and fix the MSB input bit to 0.

This may decrease a risk for a successful attack on the helper data. Generally, security concerns are summarized below, from a theoretical point of view and from a practical one. The theoretic analysis quantifies the amount of key information that may leak through the helper data and the helper data attack shows possible threats to hardware implementations of some embodiments, which will in the following also be called DSC, while the sequence of response values will also be denotes as PUF Outputs $R^n$.

For code sequence $C^k$, PUF Outputs $R^n$ and helper data $W^k$, the mutual information between the code sequence and the helper data $I(C^k; W^k)$ determines an amount of key information that leaks through the helper data. Let $\bar{R}^k$ describe the vector of selected PUF Outputs in $R^n$.

In the following, the following information theoretic definitions for entropy $H(\cdot)$, joint entropy $H(\cdot,\cdot)$, conditional entropy $H(\cdot \mid \cdot)$ and mutual information $I(\cdot;\cdot)$ will be used.

According to the definition of the mutual information:

$$I(C^k; W^k) = H(C^k) - H(C^k|W^k)$$

The helper data is computed by $W_i = f(W^{i-1}, (C_i \oplus \bar{R}_i))$.

The distance values $U^k$ are selected independently of the key, so they cannot leak any key information. Therefore, the leakage of the helper data $W^k$ only depends on $V^k = C^k \oplus \bar{R}^k$

Using the helper data computation in the conditioned entropy within the previous equation

$$H(C^k|W^k) = H(C^k|C^k \oplus \bar{R}^k) = H(C^k, C^k \oplus \bar{R}^k) - H(C^k \oplus \bar{R}^k).$$

$H(C^k \oplus \bar{R}^k|C^k) = H(\bar{R}^k)$, which removes the XOR in the joint entropy, such that

$$= H(C^k, \bar{R}^k) - H(C^k \oplus \bar{R}^k)$$

$C^k$ and $\bar{R}^k$ are independent so that

$$= H(C^k) + H(\bar{R}^k) - H(C^k \oplus \bar{R}^k) \, .$$

Using this in the definition of $I$ provides:

$$I(C^k; W^k) = H(C^k \oplus \bar{R}^k) - H(\bar{R}^k).$$

An upper bound can be given by $H(C^k \oplus \overline{R^k}) \leq k$.

$$I(C^k; W^k) \leq k - H(\bar{R}^k).$$

That results with the conclusion that the leakage can be reduced nearly down to zero with diligent code design such that $H(C^k \oplus \overline{R^k}) \leq H(\bar{R}^k) + \varepsilon$ with $\varepsilon > 0$. Further, the previous equation shows that the leakage is basically zero for test functions or PUFs with high entropy, such as the SRAM PUF.

A possible attacker has no access to the response values (PUF Outputs) or the key. However, the helper data may be stored in an unprotected external memory, so an attacker may arbitrarily read or modify this data. Furthermore, we assume that the attacker can verify if a cryptographic operation cryptop(input data, key) that is keyed by a secret information or security key derived from the series of response values of the PUF shows valid behavior or not, for example by observing if a firmware decryption of a practical implementation is successful and the system boots properly.

DSC does not split the PUF response into blocks but uses one long sequence out of which all code sequence bits are referenced. This may provide for the possibility to compare subsequent PUF response bits by modifying the helper data. In the DSC_DEC case illustrated as an embodiment in Fig. 3, the helper data contains pointers $u_i$ to the PUF Outputs, as well as inversion values $v_i$ that allow inverting each code sequence bit. An attacker may compare two subsequent code sequence bits $i$ and $i + 1$ by modifying the pointers and parity values. As a result, he may learn whether code sequence bits $C_i$ and $C_{i+1}$ are equal or the inverse of each other.

From a basic perspective, an attacker would want to swap $C_i$ and $C_{i+1}$ and observe if the PUF System still behaves correctly. In practice, the address encoding scheme does not allow to go backwards from $C_{i+1}$ to $C_i$. However, one can skip $C_i$ by modifying the appropriate pointer to point from $C_{i-1}$ to $C_{i+1}$, and then choose an intermediate PUF response bit $r$ between position $i + 1$ and $i + 2$ for the $i + 1$-th position, such that the position of subsequent bits remains unchanged. For the proposed encoding scheme, he would need to change $U_i$ to $U_i + U_{i+1} + 1$, $U_{i+1}$ to $r-1$, and $U_{i+2}$ to $U_{i+2} - r$. If an attacker chooses an unreliable bit position for $r$, the PUF will become unstable and generate one out of two possible different keys and cryptop will produce one out of two different outputs. One of the two possible outputs is wrong in any case, while the other output is correct if $C_i = C_{i+1}$ holds and wrong if $C_i = C_{i+1} \oplus 1$ is true. The cryptop outputs do not need to be visible to the attacker. It is sufficient for him to observe whether the system behaves correctly in any of $t_{max}$ test runs; if that happens, the attacker has learned that the correct cryptop output was generated.

Some embodiments reduce the possibility of a successful attack by combining the reconstructed security key (keyrec) with at least a part of the helper data to provide a combined security key (keysec) used for the encryption, for example by using a hash value of the helper data W: keysec = keyrec $\oplus$ SPRH(W), where SPRH is a second preimage resistant hash function. This may prevent targeted manipulations of the helper data, as flipping one bit in the helper data leads to a keysec in which on average 50% of the bits are flipped.

The embodiment of Fig. 9 was, for example, implemented using an FPGA and the efficiency was compared to implementations of conventional approaches. To be able to compare the embodiments using DSC with existing implementations, a soft decision SRAM PUF scenario with an average bit error probability of 15% was used. A goal is to reproduce the key with an error probability of $10^{-6}$ and the results are summarized within the following table.

| | PUF Output bits (# bits for response value) | Helper data Bits | Slices within FPGA | Block RAM Bits |
|---|---|---|---|---|
| Code-Offset RM-GMC | 1536 | 13952 | 237 | 32768 |
| Code-Offset Golay | 3696 | 3824 | $\geq 907$ | 0 |

(continued)

|  | PUF Output bits (# bits for response value) | Helper data Bits | Slices within FPGA | Block RAM Bits |
|---|---|---|---|---|
| C-IBS RM-GMC | 2304 | 9216 | 250 | 0 |
| DSC Conv. Code Mean Error | 810 | 1890 | 280 | 5632 |

For the mean error DSC implementation, we set the maximal distance to q = 64, which leads to a yield y > 99.9%. The yield determines how many manufactured devices fulfill the specification. The results within the table show that implementations of embodiments are significantly more efficient than all comparable references in terms of the required number of response values (PUF size, ≈ 50% less) and helper data size (≈ 50% less). The Block RAM consumption is small even on small FPGAs and the number of slices is comparable to previous work (about 120%). The results for the FPGA implementation demonstrate that embodiments using DSC are not only efficient in their theoretical performance but can also be brought into practice.

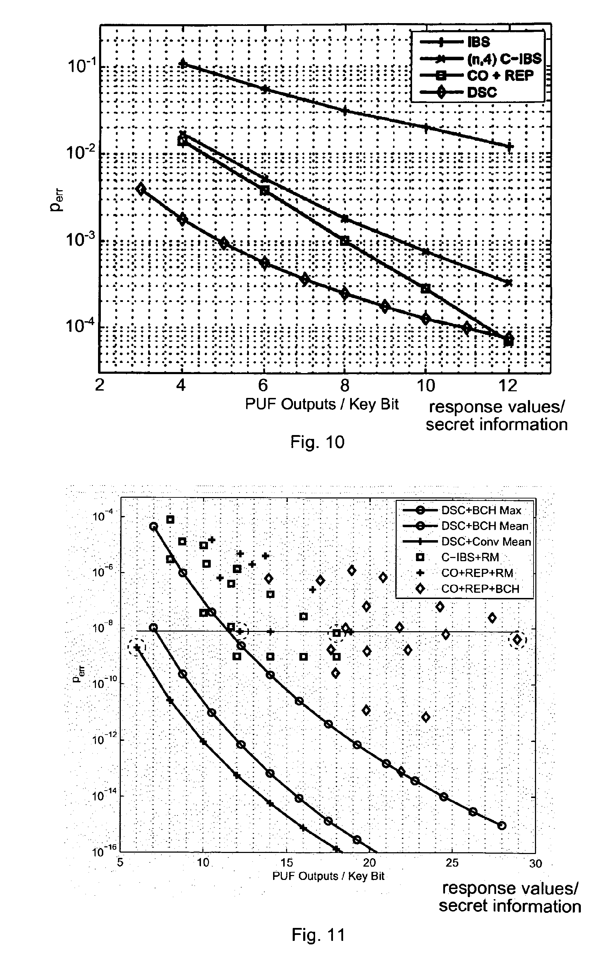

Figs. 10 and 11 illustrate some performance comparisons of some embodiments with conventional approaches. Two quantities will be observed. The yield determines how many manufactured devices fulfill the specification and the bit error probability at the output defines the reliability of the system in the field.

During manufacturing and testing, devices are easy to access and the consequences of a defective device are very limited. When a device is used in the field, operation outside of the specification threatens the integrity of the system in which the device is used. To make things worse, it can be very hard to detect the violation of the specification in the field without sophisticated test equipment. Even when it is detected, it can still be hard to replace the device in a timely manner. Therefore, designers are likely willing to trade a reasonable loss in yield during manufacturing for an increased reliability in the field.

There are two events in which a practical implementation of an embodiment, i.e. of DSC, fails to generate helper data: The first event error_1 occurs when a PUF response does not contain enough bits with the specified maximal error probability $p_{max}$ or less. The second event error_2 occurs when the distance between two indexed PUF Outputs exceeds the maximum value that can be represented in the helper data.

Let pdf define the probability density function and cdf the cumulative distribution function over all PUF Outputs. Further, let Pr denote a probability and E(-) the expectation. We define p as probability that the error probability of a PUF Output is within the specified range.

$$p = \Pr[E(r_i) \in [0, p_{max}] \cup [1 - p_{max}, 1]]$$
$$= cdf(p_{max}) - (1 - cdf(1 - p_{max})) \quad .$$

For the case of error_1, DSC encodes k code sequence bits and n PUF Outputs, the probability of the first error event is the sum over all probabilities that $R^n$ PUF Output contain less than k elements with

$$E(r_i) \in [0, p_{max}] \cup [1 - p_{max}, 1], i \in \{1, ..., n\},$$

$$e_1 = \sum_{i=0}^{k-1} \binom{n}{i} p^i (1-p)^{n-i} \quad .$$

For the second event error_2 and maximum distance value $q = 2^1$, no suitable PUF Outputs can be found with probability $(1-p)^q$. Thus, no code sequence bit will fail with $(1-(1-p)^q)^k$. Therefore the probability that at least one overflow in a code sequence bit will occur is: $e_2 = 1-(1-(1-p)^q)^k$.

As a consequence, the yield y is computed by the probability that neither error_1 nor error_2 occur. Error_1 and error_2 are not disjoint, so $y > 1-(e_1+e_2)$ applies.

Note that the $e_1$ reveals the correlation between worst case reliability and size of the PUF, whereas $e_2$ is only affected by the size of the helper data.

The maximum output bit error probability of DSC is bounded by $p_{max}$. The mean error probability of DSC is

13

calculated by the integral over the error probabilities of all PUF Outputs within the specification, weighted by their probability of occurrence.

$$p_{err} = \left( \int_0^{p_{max}} pdf(x) \cdot x \ dx + \int_{1-p_{max}}^1 pdf(x) \cdot (1-x) \ dx \right)$$
$$/ \ (cdf(p_{max}) + 1 - cdf(1 - p_{max})) \quad .$$

A comparison of embodiments of DSC with simulation results of conventional approaches is illustrated in Fig. 10 and demonstrates the efficiency of the embodiments. We chose to concatenate the Code-Offset Syndrome coding with a repetition code (CO+REP) so that all approaches reproduce one key bit per block. Fig. 10 shows the mean bit error probabilities of Syndrome coding schemes without second stage error correction codes (ECCs) for response values generated from test functions of SRAMs (SRAM PUFs) with average bit error probability 15%. For DSC according to the embodiments, n is chosen such that $e_1 = 5 \times 10^{-4}$.

Fig. 10 illustrates that embodiments with DSC have almost 10x less errors than C-IBS and the Code-Offset Syndrome coding with a repetition code for a ratio of 4 PUF Outputs per key bit. This is caused by the effect that the reliability of the blocks varies significantly for the block approaches. For a rate of 12 bits of response values per bit of secret information, the curves of DSC and the Code-Offset cross. This demonstrates that selecting 8% of the bits very carefully with DSC is as efficient as combining blocks of 12 with the Code-Offset method. Hence, embodiments may decrease the required number of response values for a given length of the secret information.

The fuzzy extractor is evaluated for the same benchmark scenario. Embodiments of DSC-methods to derive secret information are combined with two different methods of using additional redundancy information (channel codes) in order to increase reliability. One embodiment uses a small (63,36,11) BCH code for that purpose to provide results with a previously investigated code class. A further embodiment uses a convolutional code for the same purpose.

All classes of channel codes have in common that an information sequence is encoded to a longer code sequence. A decoder maps sequences that are close to a code sequence to the same information sequence. This permits to correct errors in a code sequence that was transmitted over a channel. To avoid confusions between channel and Syndrome coding, all channel code parameters will be denoted with the corresponding Greek letters. The encoder of a $(\nu, \kappa, [\mu])$ convolutional code shifts all information bits through a shift register of length $\mu$.

The main difference to block codes is that every information bit is woven into the code stream with a certain impact length instead of encoding independent blocks where every code bit might be affected by every information bit within one block.

The convolutional encoder has $\kappa$ inputs and $\nu$ outputs and the code sequence bits are computed from the state of the shift register and the current input bit. A larger memory increases the number of code sequence bits that are affected by every information bit, which increases the error correction capability of the code, as well as its implementation complexity.

The Viterbi algorithm was used to remove the redundancy information introduced by means of the convolutional code. The Viterbi algorithm is a maximum likelihood decoding algorithm, which is the communications term for an optimal decoder that makes the best possible decision based on its input data. The decoding complexity of the Viterbi algorithm only increases linearly with the length of the code sequence, which makes it easy to handle in practice.

For the comparison, a (2,1,[7]) code was used, which is an encoder with one input, two outputs and seven memory states. The impulse responses that connect the register bits and form the output sequences were chosen to be:

$$p_1 = x^7 + x^5 + x^2 + x^1 + x^0$$

$$p_2 = x^7 + x^6 + x^5 + x^4 + x^3 + x^0 .$$

A 128 bit input sequence is encoded to $(128 + \mu)\frac{\nu}{\kappa} = 270$ code sequence bits. The last $\mu$ bits are necessary to shift out the last information bit out of the shift register such that it also affects $2(\mu + 1)$ code sequence bits.

Generally, a decoding error occurs in a sequence with Hamming weight w, if e errors occur, and

$$e > \lfloor (w-1)/2 \rfloor$$

The probability $p_w$ of decoding errors of a sequence with Hamming weight w for a channel with bit error probability p is bounded by

$$p_w < \left( 2\sqrt{p(1-p)} \right)^w$$

In the next step, we will analyze the mean error over the PUF distribution given by $p_{err}$ above.

$$E(p_w) < E\left( \left( 2\sqrt{p(1-p)} \right)^w \right)$$

For i.i.d PUF responses, every factor can be treated independently.

$$E(p_w) < \left( E\left( 2\sqrt{p(1-p)} \right) \right)^w$$

For the further bounding we will apply Jensen's inequality twice on concave functions. The concavity of the square root function permits

$$< \left( 2\sqrt{E\left( p(1-p) \right)} \right)^w$$

Again, p(1-p) is concave, so

$$< \left( 2\sqrt{E(p)(1-E(p))} \right)^w$$

Hence, $p_w$ can be bounded by

$$E(p_w) < \left( 2\sqrt{p_{err}(1-p_{err})} \right)^w$$

The information weight I(w) of a code gives the number of sequences with specific hamming weights. The information weight spectrum of the codes used herein is known. For convolutional codes with one input, the bit error probability is bounded by:

$$P_{err} < \sum_w I(w) \cdot p_w$$

For block codes, the following applies with respect to the bit error probabilities. For a $(\nu, \kappa, \delta)$ code with code length $\nu$, code size $\kappa$ and code distance $\delta$.

With bounded minimum distance decoding, $e = \left\lfloor \dfrac{\delta-1}{2} \right\rfloor$ and input bit error probability p, the block error probability is given by

$$P_{Block} = 1 - \sum_{j=0}^{e} p^j (1-p)^{n-j}$$

.

Assuming that in the worst case all information bits differ between two distinct codewords, the bit error probability is bounded by:

$$P_{err\ max} < \kappa\ P_{Block}$$.

However, the information sequences of codewords differ in average in $\frac{\kappa}{2}$ bits, so a decoding error leads in average to $\frac{\kappa}{2}$ bit errors.

$$P_{err\ max} < \frac{\kappa}{2}\ P_{Block}$$.

Fig. 11 shows the relation between the number of response values (PUF Outputs) per key bit of the secret information and bounded or simulated bit error probabilities for several fuzzy extractors, i.e. for several methods for deriving secret information from response values. Previous approaches are visualized by unconnected points and the values interconnected by bold lines show the result of the previously described our new DSC fuzzy extractor. All solutions below the thin horizontal line fulfill the key error probability of $10^{-6}$.

The maximum error of embodiments using DSC is comparable to the best mean bit error probabilities of conventional approaches. The mean error of the embodiments using DSC is several orders of magnitude lower than the references even for a relatively small BCH code. The (2,1,[7]) convolutional code is even more effective.

In summary, this work presents embodiments also named Differential Sequence Coding (DSC). Some DSC embodiments scan the PUF sequentially to find PUF Outputs or response values of the PUF test function with a reliability within a given specification. Storing the relative distance between the used PUF responses may reduce the size of the helper data significantly, compared to storing the absolute position. This approach may be more efficient than previous schemes and further, one may ensure a minimum reliability for every single device that will be deployed in the field. Considering this, embodiments relate to the new and efficient Syndrome coding scheme DSC with a predictable worst case error probability for every device.

In summary, the embodiments disclosed and analyzed before introduce a new Syndrome coding scheme. The embodiments using DSC break up the fixed small intervals in existing schemes to index the best bits over the entire PUF or test function. It was demonstrated that DSC is significantly more efficient than previous work for a widely used benchmark scenario and provides techniques to calculate the maximum and mean error of a DSC based system. Within a security analysis it was shown that DSC is secure in theory and provides countermeasures to inhibit a practical attack strategy. An exemplary FPGA implementation reduces the size of the PUF and the helper data by 50% compared to benchmark implementations and uses only 20% more slices.

Embodiments of an apparatus for deriving secret information from a series of response values of a response of a test function, the test function depending on a physical property of an object, the series comprising a first response value at a first position within the series and a second response value at a different second position within the series, comprises a memory adapted to store helper data associated with the second response value, the helper data being indicative of a distance between the first position and the second position within the series. The apparatus further comprises a position evaluator adapted to determine the position of the second response value using the first position and the helper data and a determiner adapted to derive a first part of the secret information from the first response value and to derive a second part of the secret information from the second response value.

Embodiments of the apparatus further comprise an encrypter adapted to encrypt data using a security key derived from the secret information.

Embodiments of a method for providing helper data allowing to derive secret information from a series of response values of a response of a test function, the test function depending on a physical property of an object comprises providing a predetermined criterion, the predetermined criterion being indicative of a predetermined property of a response value to be used for the deriving of the secret information. The method further comprises determining a first position of a first response value within the series that fulfills the predetermined criterion and determining information on a distance between the first position and a second position of a second response value within the series, the second response value being a subsequent response value fulfilling the predetermined criterion after the first response value. Further, the method comprises storing or outputting information being indicative of the distance as a helper data associated with the second response value.

According to some embodiments, the predetermined criterion is fulfilled when a probability that a secret number is equal to a number represented by the response value is above a predetermined threshold, wherein the secret information comprises a series of numbers and wherein secret number being given by a select number of the series.

According to some embodiments, the method further comprises determining helper data, the determining comprising encoding of a series of numbers indicative of a distance between positions of neighboring response values using an encoding rule such that a number of information units required to store the helper data is reduced.

According to some embodiments, the helper data is determined using run length encoding.

Embodiments may further provide a computer program having a program code for performing one of the above methods, when the computer program is executed on a computer or processor. A person of skill in the art would readily recognize that steps of various above-described methods may be performed by programmed computers. Herein, some embodiments are also intended to cover program storage devices, e.g., digital data storage media, which are machine or computer readable and encode machine-executable or computer-executable programs of instructions, wherein the instructions perform some or all of the acts of the above-described methods. The program storage devices may be, e.g., digital memories, magnetic storage media such as magnetic disks and magnetic tapes, hard drives, or optically readable digital data storage media. The embodiments are also intended to cover computers programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. It will thus be appreciated that those skilled in the art will be able to devise various arrangements that, although not explicitly described or shown herein, embody the principles of the disclosure and are included within its scope. Furthermore, all examples recited herein are principally intended expressly to be only for pedagogical purposes to aid the reader in understanding the principles of the disclosure and the concepts contributed by the inventor(s) to furthering the art, and are to be construed as being without limitation to such specifically recited examples and conditions. Moreover, all statements herein reciting principles, aspects, and embodiments of the disclosure, as well as specific examples thereof, are intended to encompass equivalents thereof.

Functional blocks denoted as "means for ..." (performing a certain function) shall be understood as functional blocks comprising circuitry that is configured to perform a certain function, respectively. Hence, a "means for s.th." may as well be understood as a "means configured to or suited for s.th.". A means configured to perform a certain function does, hence, not imply that such means necessarily is performing the function (at a given time instant).

Functions of various elements shown in the figures, including any functional blocks labeled as "means", "means for providing a sensor signal", "means for generating a transmit signal.", etc., may be provided through the use of dedicated hardware, such as "a signal provider", "a signal processing unit", "a processor", "a controller", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, Application Specific Integrated Circuit (ASIC), Field Programmable Gate Array (FPGA), Read Only Memory (ROM) for storing software, Random Access Memory (RAM), and non-volatile storage. Other hardware, conventional and/or custom, may also be included.

It should be appreciated by those skilled in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent or independent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective acts of these methods.

Further, it is to be understood that the disclosure of multiple acts or functions disclosed in the specification or claims may not be construed as to be within the specific order. Therefore, the disclosure of multiple acts or functions will not limit these to a particular order unless such acts or functions are not interchangeable for technical reasons. Furthermore, in some embodiments a single act may include or may be broken into multiple sub acts. Such sub acts may be included and part of the disclosure of this single act unless explicitly excluded.

**Claims**

1. A method for deriving secret information from a series of response values of a response of a test function, the test function depending on a physical property of an object, comprising:

   deriving (400) a first part of the secret information from a first response value at a first position within the series; determining (402) the position of a second response value within the series using the first position and helper data (130) associated with the second response value, the helper data (130) being indicative of a distance between the first position and the second position; and deriving (404) a second part of the secret information from the second response value.

2. The method according to claim 1, wherein deriving the first part of the secret information comprises evaluating the first response value using a first association function to obtain a first secret number and wherein deriving the second part of the secret information comprises evaluating the second response value using the first association function or a second association function to obtain a second secret number.

3. The method according to claims 1 or 2, further comprising:

   deriving at least a part of a reconstructed security key from the secret information, the deriving comprising removing redundancy information from the secret information.

4. The method according to claim 3, wherein the redundancy information is removed using a Viterbi decoder.

5. The method according to claims 3 or 4, further comprising combining the reconstructed security key with at least a part of the helper data (130) to provide a combined security key.

6. The method according to any of the preceding claims, further comprising:

   receiving an encoded representation of the helper data (132) and determining the helper data (130) using a decoding rule.

7. A method for providing helper data (130) allowing to derive secret information from a series of response values (110; 302) of a response of a test function, the test function depending on a physical property of an object, comprising:

   providing (102) a predetermined criterion, the predetermined criterion being indicative of a predetermined property of a response value to be used for the deriving of the secret information; determining (104) a first position (114a) of a first response value within the series that fulfills the predetermined criterion; determining (106) information on a distance (308) between the first position (114a) and a second position (114b) of a second response value within the series, the second response value being a subsequent response value fulfilling the predetermined criterion after the first response value; and storing (108) or outputting information being indicative of the distance as a helper data (130) associated with the second response value.

8. The method according to claim 7, further comprising:

   selecting the predetermined criterion from among a set of possible criteria.

9. The method according to claim 7 or 8, wherein the predetermined criterion is fulfilled when a probability that a secret number is equal to a number represented by the response value is above a predetermined threshold, the secret number being derived from at least a part of the secret information using a first association function.

10. The method according to any of claims 8 or 9, further comprising:

    selecting the first association function from a group of possible association functions.

11. The method according to claim 10, wherein association information being indicative of the first association function (134) is further stored as helper data (130) associated with the second response value.

12. The method according to any of claims 7 to 11, wherein the secret information comprises information on a security key.

13. The method according to claim 12, further comprising:

    generating the secret information, wherein generating comprises deriving redundancy information from the security key and incorporating the redundancy information into the secret information.

14. The method according to claim 13, wherein the redundancy information is derived using a convolutional code.

15. The method according to any of claims 7 to 14, further comprising:

    determining helper data (132), the determining comprising encoding of a series of numbers (130) indicating a distance between positions of neighboring response values using an encoding rule.

16. The method according to claim 15, wherein the encoding rule is such that a number of information units required to store the helper data (132) is reduced, in particular using Run Length Encoding.

17. Computer program having a program code for performing the method of any of claims 1 to 16, when the computer program is executed on a computer or processor.

18. An apparatus (500) for deriving secret information from a series of response values (302) of a response of a test function, the test function depending on a physical property of an object, the series comprising a first response value at a first position within the series and a second response value at a different second position within the series, the apparatus comprising:

    a memory adapted to store helper data (130) associated with the second response value, the helper data (130) being indicative of a distance between the first position and the second position within the series;
    a position evaluator adapted to determine the position of the second response value using the first position and the helper data (130); and
    a determiner adapted to derive a first part of the secret information from the first response value and to derive a second part of the secret information from the second response value.

19. The apparatus of claim 18, further comprising;
    a response generator adapted to provide the series of response values as an output of the test function.

20. An apparatus (300) for providing helper data (130) allowing to derive a secret information from a series of response values of a response of a test function, the test function depending on a physical property of an object, comprising:

    a response value evaluator (304) adapted to determine a first response value within the series that fulfills a predetermined criterion, the predetermined criterion being indicative of a predetermined property of a response value to be used for the deriving of the secret information, and to a determine a second response value within the series, the second response value being the next response value fulfilling the predetermined criterion after the first response value;
    a helper data (306) generator adapted to determine a distance (308) between a first position of the first response value and a second position of the second response value within the series; and
    a memory or output interface (310) adapted to store or output information being indicative of the distance as helper data (130) associated to the second response value.

**Patentansprüche**

1. Ein Verfahren zum Herleiten geheimer Informationen aus einer Reihe von Antwortwerten einer Antwort einer Testfunktion, wobei die Testfunktion von einer physikalischen Eigenschaft eines Objekts abhängt, umfassend:

   Herleiten (400) eines ersten Teils der geheimen Informationen aus einem ersten Antwortwert an einer ersten Position innerhalb der Reihe;
   Bestimmen (402) der Position eines zweiten Antwortwerts innerhalb der Reihe unter Verwendung der ersten Position und Helferdaten (130), die dem zweiten Antwortwert zugeordnet sind, wobei die Helferdaten (130) eine Distanz zwischen der ersten Position und der zweiten Position anzeigen; und
   Herleiten (404) eines zweiten Teils der geheimen Informationen aus dem zweiten Antwortwert.

2. Das Verfahren gemäß Anspruch 1, wobei das Herleiten des ersten Teils der geheimen Informationen das Bewerten des ersten Antwortwerts unter Verwendung einer ersten Zuordnungsfunktion umfasst, um eine erste geheime Zahl zu erhalten, und wobei das Herleiten des zweiten Teils der geheimen Informationen das Bewerten des zweiten Antwortwerts unter Verwendung der ersten Zuordnungsfunktion oder einer zweiten Zuordnungsfunktion umfasst, um eine zweite geheime Zahl zu erhalten.

3. Das Verfahren gemäß Anspruch 1 oder 2, ferner umfassend:

   Herleiten von zumindest einem Teil eines rekonstruierten Sicherheitsschlüssels aus den geheimen Informationen, wobei das Herleiten das Entfernen von Redundanzinformationen aus den geheimen Informationen umfasst.

4. Das Verfahren gemäß Anspruch 3, wobei die Redundanzinformationen unter Verwendung eines Viterbi-Decoders entfernt werden.

5. Das Verfahren gemäß Anspruch 3 oder 4, ferner umfassend das Kombinieren des rekonstruierten Sicherheitsschlüssels mit zumindest einem Teil der Helferdaten (130), um einen kombinierten Sicherheitsschlüssel bereitzustellen.

6. Das Verfahren gemäß einem der vorangehenden Ansprüche, ferner umfassend:

   Empfangen einer kodierten Repräsentation der Helferdaten (132) und Bestimmen der Helferdaten (130) unter Verwendung einer Dekodierungsregel.

7. Ein Verfahren zum Bereitstellen von Helferdaten (130), das das Herleiten geheimer Informationen aus einer Reihe von Antwortwerten (110; 302) einer Antwort einer Testfunktion erlaubt, wobei die Testfunktion von einer physikalischen Eigenschaft eines Objekts abhängt, umfassend:

   Bereitstellen (102) eines vorbestimmten Kriteriums, wobei das vorbestimmte Kriterium anzeigend für eine vorbestimmte Eigenschaft eines Antwortwerts ist, der für das Herleiten der geheimen Informationen verwendet werden soll;
   Bestimmen (104) einer ersten Position (114a) eines ersten Antwortwerts innerhalb der Reihe, der das vorbestimmte Kriterium erfüllt;
   Bestimmen (106) von Informationen über eine Distanz (308) zwischen der ersten Position (114a) und einer zweiten Position (114b) eines zweiten Antwortwerts innerhalb der Reihe, wobei der zweite Antwortwert ein nachfolgender Antwortwert ist, der das vorbestimmte Kriterium erfüllt, nach dem ersten Antwortwert; und
   Speichern (108) oder Ausgeben von Informationen, die die Distanz anzeigen, als Helferdaten (130), die dem zweiten Antwortwert zugeordnet sind.

8. Das Verfahren gemäß Anspruch 7, ferner umfassend:

   Auswählen des vorbestimmten Kriteriums aus einem Satz von möglichen Kriterien.

9. Das Verfahren gemäß Anspruch 7 oder 8, wobei das vorbestimmte Kriterium erfüllt ist, wenn eine Wahrscheinlichkeit, dass eine geheime Zahl gleich einer Zahl ist, die durch den Antwortwert repräsentiert ist, über einer vorbestimmten Schwelle ist, wobei die geheime Zahl aus zumindest einem Teil der geheimen Informationen unter Verwendung einer ersten Zuordnungsfunktion hergeleitet wird.

10. Das Verfahren gemäß einem der Ansprüche 8 oder 9, ferner umfassend:

   Auswählen der ersten Zuordnungsfunktion aus einer Gruppe von möglichen Zuordnungsfunktionen.

11. Das Verfahren gemäß Anspruch 10, wobei Zuordnungsinformationen, die die erste Zuordnungsfunktion (134) anzeigen, ferner als Helferdaten (130) gespeichert werden, die dem zweiten Antwortwert zugeordnet sind.

12. Das Verfahren gemäß einem der Ansprüche 7 bis 11, wobei die geheimen Informationen Informationen über einen Sicherheitsschlüssel umfassen.

13. Das Verfahren gemäß Anspruch 12, ferner umfassend:

   Erzeugen der geheimen Informationen, wobei das Erzeugen das Herleiten von Redundanzinformationen aus dem Sicherheitsschlüssel und das Einlagern der Redundanzinformationen in die geheimen Informationen umfasst.

14. Das Verfahren gemäß Anspruch 13, wobei die Redundanzinformationen unter Verwendung eines Faltungscodes hergeleitet werden.

15. Das Verfahren gemäß einem der Ansprüche 7 bis 14, ferner umfassend:

   Bestimmen von Helferdaten (132), wobei das Bestimmen das Kodieren einer Reihe von Zahlen (130) umfasst, die eine Distanz zwischen Positionen von benachbarten Antwortwerten anzeigt, unter Verwendung einer Kodierungsregel.

16. Das Verfahren gemäß Anspruch 15, wobei die Kodierungsregel derart ist, dass eine Anzahl von Informationseinheiten reduziert wird, die zum Speichern der Helferdaten (132) erforderlich sind, insbesondere unter Verwendung einer Lauflängenkodierung.

17. Computerprogramm mit einem Programmcode zum Ausführen des Verfahrens gemäß einem der Ansprüche 1 bis 16, wobei das Computerprogramm auf einem Computer oder Prozessor ausgeführt wird.

18. Eine Vorrichtung (500) zum Herleiten geheimer Informationen aus einer Reihe von Antwortwerten (302) einer Antwort einer Testfunktion, wobei die Testfunktion von einer physikalischen Eigenschaft eines Objekts abhängt, wobei die Reihe einen ersten Antwortwert an einer ersten Position innerhalb der Reihe und einen zweiten Antwortwert an einer unterschiedlichen zweiten Position innerhalb der Reihe umfasst, die Vorrichtung umfassend:

   einen Speicher, der angepasst ist, um Helferdaten (130) zu speichern, die dem zweiten Antwortwert zugeordnet sind, wobei die Helferdaten (130) eine Distanz zwischen der ersten Position und der zweiten Position innerhalb der Reihe anzeigen;
   eine Positionsbewertungseinrichtung, die angepasst ist, um die Position des zweiten Antwortwerts unter Verwendung der ersten Position und der Helferdaten (130) zu bestimmen; und
   einen Bestimmer, der angepasst ist, um einen ersten Teil der geheimen Informationen aus dem ersten Antwortwert herzuleiten und um einen zweiten Teil der geheimen Informationen aus dem zweiten Antwortwert herzuleiten.

19. Die Vorrichtung gemäß Anspruch 18, ferner umfassend:

   einen Antwortgenerator, der angepasst ist, um die Reihe von Antwortwerten als eine Ausgabe der Testfunktion bereitzustellen.

20. Eine Vorrichtung (300) zum Bereitstellen von Helferdaten (130), die das Herleiten einer geheimen Information aus einer Reihe von Antwortwerten einer Antwort einer Testfunktion erlaubt, wobei die Testfunktion von einer physikalischen Eigenschaft eines Objektes abhängt, umfassend:

   eine Antwortwert-Bewertungseinrichtung (304), die angepasst ist, um einen ersten Antwortwert innerhalb der Reihe zu bestimmen, der ein vorbestimmtes Kriterium erfüllt, wobei das vorbestimmte Kriterium eine vorbestimmte Eigenschaft eines Antwortwerts anzeigt, der zum Herleiten der geheimen Informationen verwendet werden soll, und zum Bestimmen eines zweiten Antwortwerts innerhalb der Reihe, wobei der zweite Antwortwert der nächste Antwortwert ist, der das vorbestimmte Kriterium erfüllt, nach dem ersten Antwortwert; ein Helferdatengenerator (306), der angepasst ist, um eine Distanz (308) zwischen einer ersten Position des ersten Antwortwerts und einer zweiten Position des zweiten Antwortwerts innerhalb der Reihe zu bestimmen; und eine Speicher- oder Ausgangsschnittstelle (310), die angepasst ist, um Informationen zu speichern oder auszugeben, die die Distanz anzeigen, als Helferdaten (130), die dem zweiten Antwortwert zugeordnet sind.

**Revendications**

1.  Procédé pour dériver des informations secrètes à partir d'une série de valeurs de réponse d'une réponse d'une fonction de test, la fonction de test étant fonction d'une propriété physique d'un objet, comprenant le fait de:

    dériver (400) une première partie des informations secrètes à partir d'une première valeur de réponse à une première position dans la série;
    déterminer (402) la position d'une deuxième valeur de réponse dans la série à l'aide de la première position et des données auxiliaires (130) associées à la deuxième valeur de réponse, les données auxiliaires (130) étant indicatives d'une distance entre la première position et la deuxième position; et
    dériver (404) une deuxième partie des informations secrètes à partir de la deuxième valeur de réponse.

2.  Procédé selon la revendication 1, dans lequel le fait de dériver la première partie des informations secrètes comprend le fait d'évaluer la première valeur de réponse à l'aide d'une première fonction d'association, pour obtenir un premier numéro secret, et dans lequel le fait de dériver la deuxième partie des informations secrètes comprend le fait d'évaluer la deuxième valeur de réponse à l'aide de la première fonction d'association ou d'une deuxième fonction d'association, pour obtenir un deuxième numéro secret.

3.  Procédé selon les revendications 1 ou 2, comprenant par ailleurs le fait de:

    dériver au moins une partie d'une clé de sécurité reconstruite à partir des informations secrètes, le fait de dériver comprenant le fait d'éliminer des informations de redondance des informations secrètes.

4.  Procédé selon la revendication 3, dans lequel les informations de redondance sont éliminées à l'aide d'un décodeur de Viterbi.

5.  Procédé selon les revendications 3 ou 4, comprenant par ailleurs le fait de combiner la clé de sécurité reconstruite avec au moins une partie des données auxiliaires (130), pour fournir une clé de sécurité combinée.

6.  Procédé selon l'une quelconque des revendications précédentes, comprenant par ailleurs le fait de:

    recevoir une représentation codée des données auxiliaires (132) et
    déterminer les données auxiliaires (130) à l'aide d'une règle de décodage.

7.  Procédé pour fournir des données auxiliaires (130) permettant de dériver des informations secrètes à partir d'une série de valeurs de réponse (110; 302) d'une réponse d'une fonction de test, la fonction de test étant fonction d'une propriété physique d'un objet, comprenant le fait de:

    fournir (102) un critère prédéterminé, le critère prédéterminé étant indicatif d'une propriété prédéterminée d'une valeur de réponse à utiliser pour dériver les informations secrètes;
    déterminer (104) une première position (114a) d'une première valeur de réponse dans la série qui remplit le critère prédéterminé;
    déterminer (106) des informations sur une distance (308) entre la première position (114a) et une deuxième position (114b) d'une deuxième valeur de réponse dans la série, la deuxième valeur de réponse étant une valeur de réponse suivante remplissant le critère prédéterminé après la première valeur de réponse; et
    mémoriser (108) ou sortir des informations indiquant la distance comme une donnée auxiliaire (130) associée à la deuxième valeur de réponse.

8. Procédé selon la revendication 7, comprenant par ailleurs le fait de:

sélectionner le critère prédéterminé parmi un ensemble de critères possibles.

9. Procédé selon les revendications 7 ou 8, dans lequel le critère prédéterminé est rempli lorsqu'une probabilité qu'un numéro secret soit égal à un numéro représenté par la valeur de réponse est supérieure à un seuil prédéterminé, le numéro secret étant dérivé à partir d'au moins une partie des informations secrètes à l'aide d'une première fonction d'association.

10. Procédé selon l'une quelconque des revendications 8 ou 9, comprenant par ailleurs le fait de:

sélectionner la première fonction d'association parmi un groupe de fonctions d'association possibles.

11. Procédé selon la revendication 10, dans lequel des informations d'association indiquant la première fonction d'association (134) sont par ailleurs mémorisées comme données auxiliaires (130) associées à la deuxième valeur de réponse.

12. Procédé selon l'une quelconque des revendications 7 à 11, dans lequel les informations secrètes comprennent des informations sur une clé de sécurité.

13. Procédé selon la revendication 12, comprenant par ailleurs le fait de:

générer les informations secrètes, où le fait de générer comprend le fait de dériver des informations de redondance à partir de la clé de sécurité et d'incorporer les informations de redondance dans les informations secrètes.

14. Procédé selon la revendication 13, dans lequel les informations de redondance sont dérivées à l'aide d'un code convolutif.

15. Procédé selon l'une quelconque des revendications 7 à 14, comprenant par ailleurs le fait de:

déterminer des données auxiliaires (132), le fait de déterminer comprenant le fait de coder une série de numéros (130) indiquant une distance entre des positions de valeurs de réponse voisines à l'aide d'une règle de codage.

16. Procédé selon la revendication 15, dans lequel la règle de codage est telle qu'un nombre d'unités d'information requises pour mémoriser les données auxiliaires (132) est réduit, en particulier à l'aide d'un Codage par Plage.

17. Programme d'ordinateur présentant un code de programme pour réaliser le procédé selon l'une quelconque des revendications 1 à 16 lorsque le programme d'ordinateur est exécuté sur un ordinateur ou un processeur.

18. Appareil (500) permettant de dériver des informations secrètes à partir d'une série de valeurs de réponse (302) d'une réponse d'une fonction de test, la fonction de test étant fonction d'une propriété physique d'un objet, la série comprenant une première valeur de réponse à une première position dans la série et une deuxième valeur de réponse à une deuxième position différente dans la série, l'appareil comprenant:

une mémoire adaptée pour mémoriser des données auxiliaires (130) associées à la deuxième valeur de réponse, les données auxiliaires (130) étant indicatives d'une distance entre la première position et la deuxième position dans la série;
un évaluateur de position adapté pour déterminer la position de la deuxième valeur de réponse à l'aide de la première position et des données auxiliaires (130); et
un déterminateur adapté pour dériver une première partie des informations secrètes à partir de la première valeur de réponse et pour dériver une deuxième partie des informations secrètes à partir de la deuxième valeur de réponse.

19. Appareil selon la revendication 18, comprenant par ailleurs;
un générateur de réponse adapté pour fournir la série de valeurs de réponse comme sortie de la fonction de test.

20. Appareil (300) permettant de fournir des données auxiliaires (130) permettant de dériver une information secrète d'une série de valeurs de réponse d'une réponse d'une fonction de test, la fonction de test étant fonction d'une

EP 2 773 061 B1

propriété physique d'un objet, comprenant:

un évaluateur de valeur de réponse (304) adapté pour déterminer une première valeur de réponse dans la série qui remplit un critère prédéterminé, le critère prédéterminé étant indicatif d'une propriété prédéterminée d'une valeur de réponse à utiliser pour dériver les informations secrètes, et à déterminer une deuxième valeur de réponse dans la série, la deuxième valeur de réponse étant la valeur de réponse suivante qui remplit le critère prédéterminé après la première valeur de réponse;

un générateur de données auxiliaires (306) adapté pour déterminer une distance (308) entre une première position de la première valeur de réponse et une deuxième position de la deuxième valeur de réponse dans la série; et

une interface de mémoire ou de sortie (310) adaptée pour mémoriser ou sortir des informations indiquant la distance comme données auxiliaires (130) associées à la deuxième valeur de réponse.

24

provide predetermined criterion ~102

determine first position of first response value ~104

determine distance between first and second position ~106

store information on distance as helper date ~108

Fig. 1

$a_i \in (1,2,3)$     $b_i \in (1,2,3,4)$

$a = (2\ 3\ 3\ 1)$

112

114a    114b      114c    114d

| 1 | 2 | 1 | 3 | 2 | 4 | 4 | 3 | 2 | 1 |

110

$c = (2\ 2\ 4\ 2)$

116

$\boxed{1} := \Pr[B_i = 1] > 1 - \delta$

Fig. 2

$122 \sim c^4$

$120 \sim R^{16}$

$124a \sim u^4$

1    0    3    4

$124b \sim v^4$

Fig. 3

130

132 134 136

Fig. 4

130           132

store

Fig. 5

Fig. 6

devine first part
of secret info ~400

determine position of 2nd
response value ~402

devine second
part of secret info ~404

Fig. 7

502    506    504

502

508

507

500

510

Fig. 8

Fig. 9

Fig. 10

Fig. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- PUFs: Myth, fact or busted? a security evaluation of physically unclonable functions (PUFs) cast in Silicon. **V. ROZIC ; A.-R. SADEGHI ; I. VERBAUWHEDE ; C. WACHSMANN.** CHES. Springer, 2012, vol. 7428, 283-301
- **R. MAES.** Physically unclonable functions: Constructions, properties and applications. *Dissertation,* 2012
- Fuzzy extractors: How to generate strong keys from biometrics and other noisy data. **Y. DODIS ; L. REYZIN ; A. SMITH.** EUROCRYPT. Springer, 2004, vol. 3027, 523-540
- Efficient helper data key extractor on FPGAs. **C. BÖSCH ; J. GUAJARDO ; A.-R. SADEGHI ; J. SHOKROLLAHI ; P. TUYLS.** CHES. Springer, 2008, vol. 5154, 181-197
- **C. BÖSCH.** Efficient fuzzy extractors for reconfigurable hardware. *Master's Thesis, Ruhr-University Bochum,* 2008
- **R. MAES ; P. TUYLS ; I. VERBAUWHEDE.** A soft decision helper data algorithm for SRAM PUFs. *IEEE ISIT,* 2009, vol. 2009, 2101-2105
- **G. SCHNABL ; M. BOSSERT.** Soft-decision decoding of Reed-Muller codes as generalized multiple concatenated codes. *IEEE Trans, on Inf. Th.,* 1995, vol. 41 (1), 304-308
- PUFKY: A fully functional PUF-based cryptographic key generator. **R. MAES ; A. VAN HERREWEGE ; I. VERBAUWHEDE.** CHES. Springer, 2012, vol. 7428, 302-319
- **M.-D. YU ; S. DEVADAS.** Secure and robust error correction for physical unclonable functions. *IEEE Design & Test of Computers,* 2010, vol. 27 (1), 48-65
- **M.-D. YU ; R. SOWELL ; A. SINGH ; D. M'RAIHI ; S. DEVADAS.** Performance metrics and empirical results of a PUF cryptographic key generation ASIC. *IEEE HOST,* 2012, 108-115
- **M. HILLER ; D. MERLI ; F. STUMPF ; G. SIGL.** Complementary IBS: Application specific error correction for PUFs. *IEEE HOST,* 2012, 1-6
- **S.W. GOLOMB.** Run-length encodings. *IEEE Transactions on Information Theory,* 1966, vol. IT-12 (3), 399-401